# EUROPEAN PATENT APPLICATION

(11) **EP 4 498 452 A1**
(43) Date of publication of application: **29.01.2025**
(21) Application number: 23774511.2
(22) Date of filing: 07.03.2023
(51) Int. Cl.: H01M 4/62, H01M 4/13

(54) **POSITIVE ELECTRODE FOR NON-AQUEOUS ELECTROLYTE SECONDARY BATTERY, AND NON-AQUEOUS ELECTROLYTE SECONDARY BATTERY**

(30) Priority: 23.03.2022 JP 2022046694
(71) Applicant: Panasonic Intellectual Property Management Co., Ltd., Kadoma-shi, Osaka 571-0057 (JP)
(72) Inventor: UCHIDA Shuhei, Kadoma-shi, Osaka 571-0057 (JP)
(74) Representative: Novagraaf International SA
(86) International application number: PCT/JP2023/008576
(87) International publication number: WO 2023/181912

(57) **Abstract**

A non-aqueous electrolyte secondary battery according to one embodiment of the present invention includes a positive electrode core material, and a positive electrode mixture layer formed on the surface of the positive electrode core material. The positive electrode includes a C10 or lower sugar alcohol, the sugar alcohol content being less than 5 mass% relative to the mass of a positive electrode active substance contained within the positive electrode mixture layer. The sugar alcohol is, for example, included within the positive electrode mixture layer. If the positive electrode mixture layer has a multilayer structure including a first layer and a second layer, the sugar alcohol content is preferably higher in the second layer than in the first layer.

## Description

### TECHNICAL FIELD

The present disclosure relates to a positive electrode for a non-aqueous electrolyte secondary battery, and a non-aqueous electrolyte secondary battery using the positive electrode.

### BACKGROUND ART

Non-aqueous electrolyte secondary batteries such as lithium-ion batteries have been widely used for use requiring a high capacity, such as on-board use and power storage use, in recent years. Non-aqueous electrolyte secondary batteries are also required to have a heat-generation inhibiting function in case of abnormality. Since an electrode assembly, which is a main constituent of the non-aqueous electrolyte secondary battery, significantly affects the performance, many investigations have been made on a positive electrode. For example, Patent Literature 1 discloses a non-aqueous electrolyte secondary battery in which a porous layer including filler particles of a metal hydroxide is formed between: at least one of a positive electrode and a negative electrode; and a separator, which constitute an electrode assembly. Patent Literature 1 describes an effect that a battery with excellent safety is confirmed in a foreign-matter internal short-circuit test.

### CITATION LIST

### PATENT LITERATURE

PATENT LITERATURE 1: Japanese Patent No. 5574196

### SUMMARY

It is an important challenge for the non-aqueous electrolyte secondary battery to improve the heat-generation inhibiting function in case of abnormality. Particularly, a battery having a high capacity tends to experience drastic rise in temperature in case of abnormality, and therefore a higher heat-generation inhibiting function is required. In addition, the heat-generation inhibiting function needs to be improved without deterioration of the battery capacity, but it is not easy to achieve both the high capacity and the excellent heat-generation inhibiting function. The conventional art including the invention disclosed in Patent Literature 1 still has room for improvement in achievement of both the high capacity and the excellent heat-generation inhibiting function.

A positive electrode for a non-aqueous electrolyte secondary battery according to the present disclosure is a positive electrode for a non-aqueous electrolyte secondary battery including: a positive electrode core; and a positive electrode mixture layer formed on a surface of the positive electrode core, wherein the positive electrode includes a sugar alcohol having less than or equal to 10 carbon atoms, and a content rate of the sugar alcohol is less than 5 mass% based on a mass of a positive electrode active material contained in the positive electrode mixture layer.

A non-aqueous electrolyte secondary battery according to the present disclosure comprises: the above positive electrode; a negative electrode; and a non-aqueous electrolyte.

According to the positive electrode for a non-aqueous electrolyte secondary battery of the present disclosure, the non-aqueous electrolyte secondary battery having the high capacity and the excellent heat-generation inhibiting function in case of abnormality may be provided.

### BRIEF DESCRIPTION OF DRAWINGS

FIG. 1 is a sectional view of a non-aqueous electrolyte secondary battery of an example of an embodiment.
FIG. 2 is a sectional view of a positive electrode of another example of an embodiment.
FIG. 3 is a sectional view of a positive electrode of another example of an embodiment.

### DESCRIPTION OF EMBODIMENTS

As noted above, it is an important challenge for the non-aqueous electrolyte secondary battery to achieve both the high capacity and the excellent heat-generation inhibiting function. The present inventors have made intensive investigation to solve this challenge, and consequently succeeded to achieve the non-aqueous electrolyte secondary battery having the excellent heat-generation inhibiting function in case of abnormality while keeping the high capacity by using a positive electrode including a sugar alcohol having less than or equal to 10 carbon atoms at an amount of less than 5 mass% based on a mass of a positive electrode active material.

It is considered that the sugar alcohol included in the positive electrode exhibits a hydration reaction with an endothermic action in case of abnormality of the battery. This hydration reaction, which is a reaction between moisture and the sugar alcohol, proceeds with a trigger of moisture generated by decomposition of an electrolyte liquid in case of abnormality of the battery. Thus, in normal use of the battery, the sugar alcohol at the content rate of less than 5 mass% based on the mass of the positive electrode active material does not affect the battery performance. Since the sugar alcohol having less than or equal to 10 carbon atoms have large latent heat, adding such a sugar alcohol to the positive electrode highly inhibits heat generation in case of abnormality. Note that the filler of the metal hydroxide disclosed in Patent Literature 1 also has large latent heat, but it is difficult to quickly inhibit heat generation as the sugar alcohol having less than or equal to 10 carbon atoms.

Hereinafter, an example of an embodiment of the positive electrode for a non-aqueous electrolyte secondary battery according to the present disclosure and a non-aqueous electrolyte secondary battery using this positive electrode will be described in detail with reference to the drawings. Note that the present disclosure includes constitutions formed by selectively combining a plurality of embodiments and modified examples described below.

Hereinafter, a cylindrical battery housing a wound electrode assembly 14 in a bottomed cylindrical outer can 16 will be exemplified, but the exterior of the battery is not limited to the cylindrical outer can, and may be, for example, a rectangular outer can (rectangular battery) or an exterior composed of a laminated sheet including a metal layer and a resin layer (laminated battery). The electrode assembly may be a stacked electrode assembly in which a plurality of positive electrodes and a plurality of negative electrodes are alternately stacked with a separator interposed therebetween.

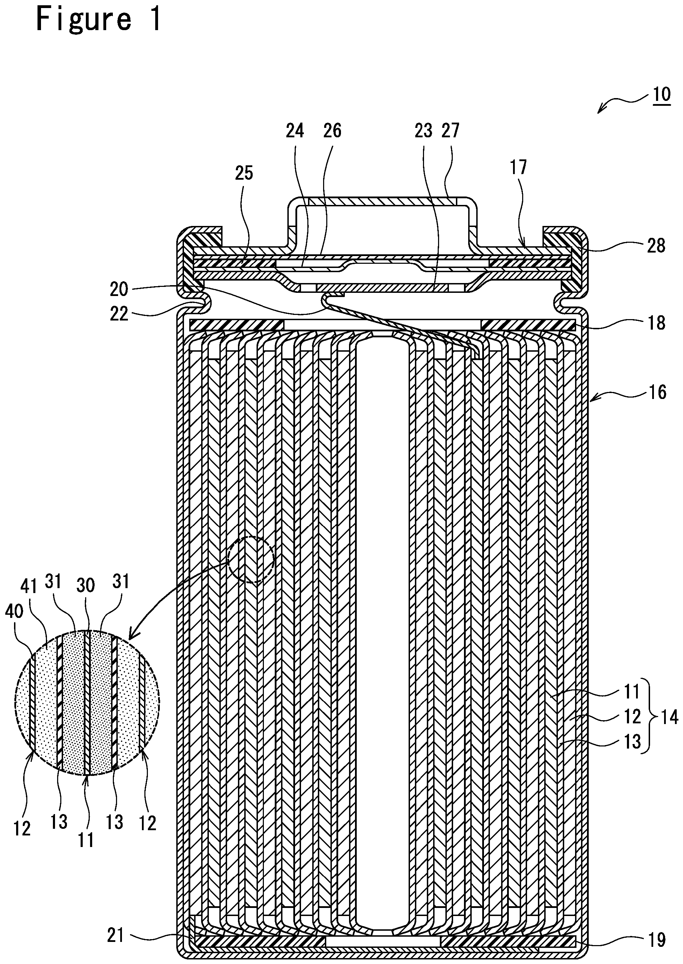

FIG. 1 is a view schematically illustrating a cross section of a non-aqueous electrolyte secondary battery 10 of an example of an embodiment. As illustrated in FIG. 1, the non-aqueous electrolyte secondary battery 10 comprises the wound electrode assembly 14, a non-aqueous electrolyte (not illustrated), and the outer can 16 housing the electrode assembly 14 and the non-aqueous electrolyte. The electrode assembly 14 includes a positive electrode 11, a negative electrode 12, and a separator 13, and has a wound structure in which the positive electrode 11 and the negative electrode 12 are spirally wound with the separator 13 interposed therebetween. The outer can 16 is a bottomed cylindrical metallic container having an opening on one side in an axial direction, and the opening of the outer can 16 is sealed with a sealing assembly 17. Hereinafter, for convenience of description, the sealing assembly 17 side of the battery will be described as the upper side, and the bottom side of the outer can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, a mixed solvent of two or more thereof, and the like are used, for example. The non-aqueous solvent may contain a halogen-substituted derivative in which hydrogen atoms of these solvents are at least partially replaced with a halogen atom such as fluorine. An example of the non-aqueous solvent is ethylene carbonate (EC), ethyl methyl carbonate (EMC), dimethyl carbonate (DMC), or a mixed solvent thereof. For the electrolyte salt, a lithium salt such as LiPF₆ is used, for example. The non-aqueous electrolyte is not limited to a liquid electrolyte but may be a solid electrolyte.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two separators 13 are formed to be one size larger than at least the positive electrode 11, and disposed to sandwich the positive electrode 11. The electrode assembly 14 has a positive electrode lead 20 connected to the positive electrode 11 by welding or the like and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole of the insulating plate 18 toward the sealing assembly 17 side, and the negative electrode lead 21 extends through an outside of the insulating plate 19 toward the bottom side of the outer can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the outer can 16 by welding or the like, and the outer can 16 becomes a negative electrode terminal.

The outer can 16 is a bottomed cylindrical metallic container having an opening on one side in an axial direction, as noted above. A gasket 28 is provided between the outer can 16 and the sealing assembly 17, thereby sealability inside the battery and insulation between the outer can 16 and the sealing assembly 17 are ensured. On the outer can 16, a grooved portion 22 in which a part of a side wall thereof projects inward to support the sealing assembly 17 is formed. The grooved portion 22 is preferably formed in a circular shape along a circumferential direction of the outer can 16, and supports the sealing assembly 17 with the upper face thereof. The sealing assembly 17 is fixed on the upper part of the outer can 16 with the grooved portion 22 and with an end part of the opening of the outer can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between each of the circumferential parts. If the internal pressure increases due to battery abnormality, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

Hereinafter, the positive electrode 11, the negative electrode 12, and the separator 13, specifically the positive electrode 11, will be described in detail.

### [Positive Electrode]

The positive electrode 11 includes a positive electrode core 30 and a positive electrode mixture layer 31 formed on a surface of the positive electrode core 30. For the positive electrode core 30, a foil of a metal stable within a potential range of the positive electrode 11, such as aluminum and an aluminum alloy, a film in which such a metal is disposed on a surface layer thereof, and the like may be used. An example of the positive electrode core 30 is a foil of aluminum or an aluminum alloy having a thickness of greater than or equal to 10 µm and less than or equal to 20 µm. The positive electrode mixture layer 31 includes a positive electrode active material, a conductive agent, and a binder, and preferably formed on both surfaces of the positive electrode core 30. An example of a thickness of the positive electrode mixture layer 31 is greater than or equal to 50 µm and less than or equal to 150 µm on one side of the positive electrode core 30.

The positive electrode 11 may be produced by applying a positive electrode mixture slurry including the positive electrode active material, the conductive agent, the binder, and the like on the positive electrode core 30, and drying and then compressing the coating to form the positive electrode mixture layers 31 on both surfaces of the positive electrode core 30. Although a detail will be described later, the positive electrode 11 includes the sugar alcohol having less than or equal to 10 carbon atoms, and the content rate of the sugar alcohol is less than 5 mass% based on the mass of the positive electrode active material.

The positive electrode mixture layer 31 includes a particulate lithium-metal composite oxide as the positive electrode active material. The lithium-metal composite oxide is a composite oxide containing a metal element such as Co, Mn, Ni, and Al in addition to Li. The metal element constituting the lithium-metal composite oxide is at least one selected from the group consisting of Mg, Al, Ca, Sc, Ti, V, Cr, Mn, Fe, Co, Ni, Cu, Zn, Ga, Ge, Y, Zr, Sn, Sb, W, Pb, and Bi, for example. Among them, at least one selected from the group consisting of Co, Ni, and Mn is preferably contained. An example of preferable composite oxides is a lithium-metal composite oxide containing Ni, Co, and Mn, and a lithium-metal composite oxide containing Ni, Co, and Al.

A median diameter (D50) on a volumetric basis of the positive electrode active material is, for example, greater than or equal to 1 µm and less than or equal to 25 µm, and preferably greater than or equal to 3 µm and less than or equal to 20 µm. The D50 means a particle diameter at which a cumulative frequency is 50% from a smaller particle diameter side in a particle size distribution on a volumetric basis. The particle size distributions of the positive electrode active material may be measured by using a laser diffraction-type particle size distribution measuring device (for example, MT3000II, manufactured by MicrotracBEL Corp.) with water as a dispersion medium. A content rate of the positive electrode active material is, for example, greater than or equal to 90 mass% and less than or equal to 99.5 mass% based on a mass of the positive electrode mixture layer 31. Note that an average particle diameter of the positive electrode active material determined by a same method as of an average particle diameter of the sugar alcohol, described later, from an SEM image of the positive electrode cross section is substantially same value as the D50 measured by using the laser diffraction-type particle size distribution measuring device.

Examples of the conductive agent included in the positive electrode mixture layer 31 may include a carbon material such as carbon black such as acetylene black and Ketjenblack, graphite, carbon nanotube (CNT), carbon nanofiber, and graphene. A preferable content rate of the conductive agent is, for example, greater than or equal to 0.1 mass% and less than or equal to 10 mass%, and more preferably greater than or equal to 0.2 mass% and less than or equal to 5 mass% based on the mass of the positive electrode mixture layer 31, which varies depending on the type of the conductive agent and the like.

Examples of the binder included in the positive electrode mixture layer 31 include a fluorine-containing resin such as polytetrafluoroethylene (PTFE) and polyvinylidene fluoride (PVdF), polyacrylonitrile (PAN), a polyimide, an acrylic resin, and a polyolefin. With these resins, carboxymethylcellulose (CMC) or a salt thereof, polyethylene oxide (PEO), and the like may be used in combination. A content rate of the binder is, for example, greater than or equal to 0.1 mass% and less than or equal to 10 mass%, and more preferably greater than or equal to 0.5 mass% and less than or equal to 5 mass% based on the mass of the positive electrode mixture layer 31.

As noted above, the positive electrode 11 includes the sugar alcohol having less than or equal to 10 carbon atoms. The sugar alcohol is a chain or cyclic polyhydric alcohol in which a carbonyl group of sugars is reduced, and has large latent heat to function as a heat absorber. In case of abnormality of the battery, it is important that the heat generation may be inhibited at, for example, greater than or equal to 150°C and less than or equal to 250°C, and adding the sugar alcohol having less than or equal to 10 carbon atoms to the positive electrode 11 may achieve effective heat absorption at this temperature. If the number of carbon atoms of the sugar alcohol is greater than 10, the effect of inhibiting heat generation in case of abnormality of the battery is considerably deteriorated.

The content rate of the sugar alcohol is less than 5 mass% based on the mass of the positive electrode active material contained in the positive electrode mixture layer 31. When the amount of the sugar alcohol added is set to be greater than or equal to 5% of the mass of the positive electrode active material, the heat-generation inhibiting function in case of abnormality is improved but the battery capacity is drastically deteriorated. Although the sugar alcohol exhibits the effect of inhibiting heat generation with addition at a small amount, the content rate of the sugar alcohol based on the mass of the positive electrode active material is preferably greater than or equal to 0.5 mass%, and more preferably greater than or equal to 1 mass%. In this case, the effect of inhibiting heat generation in case of abnormality of the battery becomes more remarkable.

The sugar alcohol is contained in the positive electrode active material layer 31 together with the positive electrode active material, for example. The sugar alcohol is of particles having an average particle diameter smaller than the average particle diameter of the positive electrode active material, and dispersed in the positive electrode mixture layer 31. Adding the sugar alcohol to the positive electrode mixture slurry may allow the positive electrode mixture layer 31 to contain the sugar alcohol. The sugar alcohol may be dispersed in an entirety of the layer without uneven presence in a part of the positive electrode active material layer 31. The sugar alcohol is preferably contained in each of the positive electrode mixture layers 31 formed on both sides of the positive electrode core 30. In each of the positive electrode mixture layers 31, the sugar alcohol is contained at a substantially equal concentration.

The number of carbon atoms of the sugar alcohol is preferably less than or equal to 8, and more preferably less than or equal to 6. The number of carbon atoms of the sugar alcohol is preferably more than or equal to 4. When the sugar alcohol having greater than or equal to 4 and less than or equal to 6 carbon atoms is added to the positive electrode 11, the sugar alcohol effectively functions at greater than or equal to 150°C and less than or equal to 250°C, and the effect of inhibiting heat generation in case of abnormality of the battery becomes more remarkable. Specific examples of the preferable sugar alcohol include erythritol, threitol, pentaerythritol, xylitol, arabitol, mannitol, sorbitol, galactitol, and inositol.

The sugar alcohol is preferably a chain molecule having greater than or equal to 4 and less than or equal to 6 carbon atoms, and specifically preferably at least one selected from the group consisting of erythritol, threitol, pentaerythritol, xylitol, mannitol, and sorbitol. Among them, threitol and mannitol are particularly preferable.

The average particle diameter of the sugar alcohol is, for example, greater than or equal to 0.05 µm and less than or equal to 5 µm, and preferably greater than or equal to 0.1 µm and less than or equal to 2 µm. The average particle diameter of the sugar alcohol being within the above range exhibits more effective endothermic action at greater than or equal to 150°C and less than or equal to 250°C, and the effect of inhibiting heat generation in case of abnormality of the battery becomes more remarkable compared with a case where the average particle diameter is out of the above range. The average particle diameter of the sugar alcohol may be regulated with, for example, a high-shearing mixer. The average particle diameter of the sugar alcohol is measured by observing the positive electrode cross section using a scanning electron microscope (SEM). Specifically, a diameter of a circumscribed circle of a sugar alcohol particle extracted from the SEM image of the positive electrode cross section is regarded as the particle diameter, and particle diameters of randomly selected 100 particles are averaged to determine the average particle diameter of the sugar alcohol.

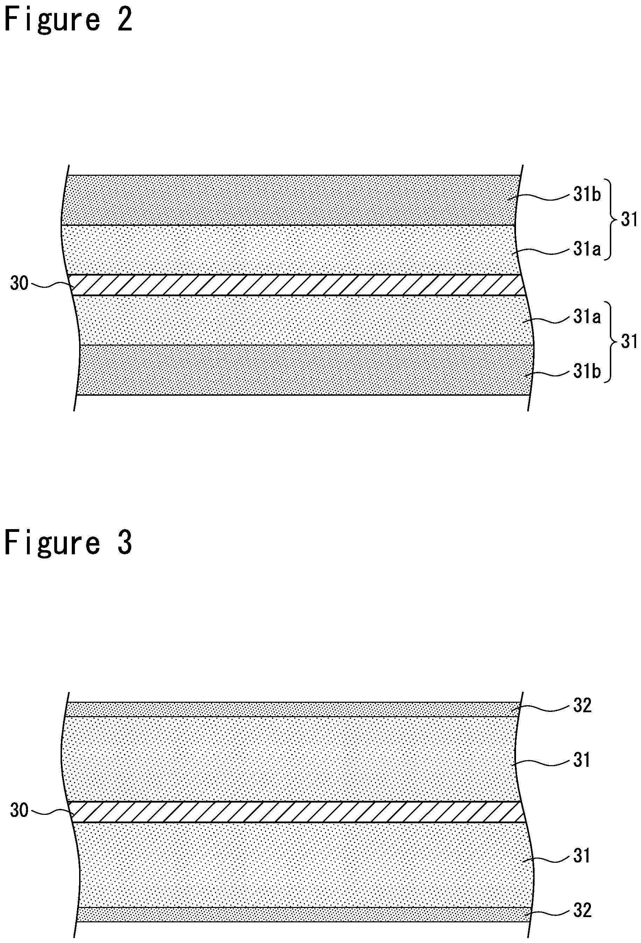

FIG. 2 is a sectional view of the positive electrode including the positive electrode mixture layer 31 having a multilayer structure. **In** the positive electrode exemplified in FIG. 2, the positive electrode mixture layer 31 includes: a first layer 31a formed on a side of the positive electrode core 30; and a second layer 31b formed above the positive electrode core 30 via the first layer 31a. **In** this case, the content rate of the sugar alcohol is preferably higher in the second layer 31b than in the first layer 31a. **In** other words, the positive electrode mixture layer 31 includes: the first layer 31a having a low content rate of the sugar alcohol; and the second layer 31b having a content rate of the sugar alcohol higher than that of the first layer 31a. **In** this case, both the high capacity and the excellent heat-generation inhibiting function are easily achieved.

The content rate of the sugar alcohol in the second layer 31b is, for example, greater than or equal to 1.3 times of the content rate of the sugar alcohol in the first layer 31a. In this case, the effect of improving heat-generation inhibition becomes more remarkable. The sugar alcohol may be contained substantially only in the second layer 31b. The positive electrode mixture layer 31 has a double-layer structure having the content rate of the sugar alcohol different from each other, but may have greater than or equal to three layers. The positive electrode mixture layer 31 may have concentration gradient such that the content rate of the sugar alcohol becomes higher in the direction away from the positive electrode core 30 side.

The types and content rates of the positive electrode active material, the conductive agent, and the binder may be equal or different between the first layer 31a and the second layer 31b. **In** the present embodiment, the same types of the positive electrode active material, the conductive agent, and the binder are used in the first layer 31a and the second layer 31b. The content rates of the conductive agent and the binder based on the mass of the positive electrode active material are each substantially equal in each of the layers. That is, the first layer 31a and the second layer 31b are layers having only different content rates of the sugar alcohol based on the mass of the positive electrode active material. The type of the sugar alcohol may be same or different in the first layer 31a and the second layer 31b.

The positive electrode exemplified in FIG. 2 may be produced by using two types of the positive electrode mixture slurries having different content rates of the sugar alcohol based on the mass of the positive electrode active material. A first positive electrode mixture slurry with a small amount of the sugar alcohol added is applied on the positive electrode core 30, and then a second positive electrode mixture slurry with a large amount of the sugar alcohol added is applied on the coating to form the positive electrode mixture layer 31 with the double-layer structure including the first layer 31a and the second layer 31b.

FIG. 3 is a sectional view of the positive electrode including a surface layer 32 containing the sugar alcohol. The positive electrode exemplified in FIG. 3 includes the surface layer 32 formed on the positive electrode mixture layer 31. The surface layer 32 is a layer having a higher content rate of the sugar alcohol than in the positive electrode mixture layer 31. The surface layer 32 is composed of, for example, the sugar alcohol and the binder, and may be formed by, for example, applying a slurry including the sugar alcohol and the binder on the surface of the positive electrode mixture layer 31. In the example illustrated in FIG. 3, the sugar alcohol may substantially not be included in the positive electrode mixture layer 31, and substantially be included only in the surface layer 32.

A thickness of the surface layer 32 is preferably less than or equal to 50% of the thickness of the positive electrode mixture layer 31. Since it is difficult to exactly compare the positive electrode mixture layer 31 and the surface layer 32 at the thickness ratio, the layers are compared at their mass ratio. The mass of the surface layer 32 is, for example, greater than or equal to 0.1% and less than or equal to 5%, and more preferably greater than or equal to 0.14% and less than or equal to 1% of the mass of the positive electrode mixture layer 31. When the mass ratio between the positive electrode mixture layer 31 and the surface layer 32 is within the above range, both the high capacity and the excellent heat-generation inhibiting function are easily achieved.

### [Negative Electrode]

The negative electrode 12 includes a negative electrode core 40 and a negative electrode mixture layer 41 formed on a surface of the negative electrode core 40. For the negative electrode core 41, a foil of a metal stable within a potential range of the negative electrode 12, such as copper and a copper alloy, a film in which such a metal is disposed on a surface layer thereof, and the like may be used. An example of the negative electrode core 40 is a foil of copper or a copper alloy having a thickness of greater than or equal to 5 µm and less than or equal to 15 µm. The negative electrode mixture layer 41 includes a negative electrode active material, a binder, and as necessary a conductive agent, and is preferably formed on both surfaces of the negative electrode core 40. A thickness of the negative electrode mixture layer 41 is, for example, greater than or equal to 30 µm and less than or equal to 150 µm on one side of the negative electrode core 40. The negative electrode 12 may be produced by applying a negative electrode mixture slurry including the negative electrode active material, the binder, and the like on the negative electrode core 40, and drying and compressing the coating to form the negative electrode mixture layers 41 on both surfaces of the negative electrode core 40.

The negative electrode mixture layer 41 includes a carbon-based active material that reversibly occludes and releases lithium ions as the negative electrode active material. A preferable carbon-based active material is a graphite such as: a natural graphite such as flake graphite, massive graphite, and amorphous graphite; and an artificial graphite such as massive artificial graphite (MAG) and graphitized mesophase-carbon microbead (MCMB). For the negative electrode active material, a Si-based active material containing Si may be used from the viewpoints of increase in an energy density and the like.

An example of the Si-based active material includes a silicon alloy, a silicon compound, and a composite material containing Si. Among them, a composite material containing Si is preferable. The preferable composite material is composite particles including an ion-conductive layer and Si particles dispersed in the ion-conductive layer. On surfaces of the composite particles containing Si, a conductive layer may be formed. An example of the composite particles is composite particles having a sea-island structure in which fine Si particles are substantially uniformly dispersed in an amorphous silicon oxide phase, and represented by the general formula SiOₓ (0<x≤2) as an entirety. The ion-conductive layer may be a silicate phase represented by the general formula Li_{2z}SiO_{(2+z)} (0<z<2) or an amorphous carbon phase.

For the binder included in the negative electrode mixture layer 41, for example, PAN, a polyimide, an acrylic resin, a polyolefin, styrene-butadiene rubber (SBR), or the like may be used. The negative electrode mixture layer 41 may include CMC or a salt thereof, polyacrylic acid (PAA) or a salt thereof, polyvinyl alcohol (PVA), and the like. To the negative electrode mixture layer 41, a conductive agent such as carbon black and CNT may be added.

### [Separator]

For the separator 13, a porous sheet having an ion permeation property and an insulation property is used. Specific examples of the porous sheet include a fine porous thin film, a woven fabric, and a nonwoven fabric. As a material for the separator 13, a polyolefin such as polyethylene and polypropylene, cellulose, and the like are preferable. The separator 13 may have a single layer structure or a multilayer structure. On a surface of the separator 13, a highly heat-resistant resin layer such as an aramid resin may be formed.

On an interface between the separator 13 and at least one of the positive electrode 11 and the negative electrode 12, a filler layer including an inorganic substance filler may be formed. Examples of the inorganic substance filler include an oxide or phosphate compound containing a metal element such as Ti, Al, Si, and Mg. The filler layer may be formed by applying a slurry containing the filler on a surface of the positive electrode 11, the negative electrode 12, or the separator 13.

### EXAMPLES

Hereinafter, the present disclosure will be further described in detail with Examples, but the present disclosure is not limited to these Examples.

### <Example 1>

### [Production of Positive Electrode]

As a positive electrode active material, a composite oxide represented by LiNi_{0.91}Co_{0.06}Al_{0.03}O₂ and having an average particle diameter of 5.9 µm was used. The positive electrode active material, acetylene black, polyvinylidene fluoride, and xylitol were mixed at a solid-content mass ratio of 100:1:1:1, and N-methyl-2-pyrrolidone (NMP) was used as a dispersion medium to prepare a positive electrode mixture slurry. Then, this positive electrode mixture slurry was applied on both surfaces of a positive electrode core composed of aluminum foil, and the coating was dried and compressed by using a roller. Thereafter, the positive electrode core was cut to a predetermined electrode size to obtain a positive electrode in which positive electrode mixture layers were formed on both surfaces of the positive electrode core. Note that an average particle diameter of xylitol in the positive electrode mixture layer was 1.8 µm. (Average particle diameters of xylitol used in other Examples and Comparative Examples were equal.)

### [Production of Negative Electrode]

As a negative electrode active material, a mixture of 95 parts by mass of graphite and 5 parts by mass of a Si-containing material represented by SiOx (X=1) was used. The negative electrode active material, a sodium salt of CMC, and a dispersion of SBR were mixed at a solid-content mass ratio of 100: 1: 1, and water was used as a dispersion medium to prepare a negative electrode mixture slurry. Then, the negative electrode mixture slurry was applied on a negative electrode core composed of copper foil, the coating was dried and compressed, and then the negative electrode core was cut to a predetermined electrode size to obtain a negative electrode in which negative electrode mixture layers were formed on both surfaces of the negative electrode core.

### [Preparation of Non-Aqueous Electrolyte Liquid]

Into a mixed solvent in which ethylene carbonate (EC) and dimethyl carbonate (DMC) were mixed at a volume ratio (25°C) of 3:7, LiPF₆ was dissolved so that the concentration was 1 M to prepare a non-aqueous electrolyte liquid.

### [Production of Test Cell]

The above positive electrode and negative electrode to which a lead was attached were wound via a separator to produce a wound electrode assembly. The electrode assembly was inserted into an exterior made of an aluminum laminate film, and dried in vacuo at 105°C for 2 hours. Thereafter, the non-aqueous electrolyte liquid was injected into the exterior, and an opening of the exterior was sealed to obtain a test cell (non-aqueous electrolyte secondary battery).

### <Example 2>

A test cell was produced in the same manner as in Example 1 except that, in the production of the positive electrode, the amount of xylitol added was changed to 3 mass% based on the mass of the positive electrode active material.

### <Example 3>

A test cell was produced in the same manner as in Example 1 except that, in the production of the positive electrode, mannitol having an average particle diameter of 1.5 µm was used instead of xylitol. (Average particle diameters of mannitol used in other Examples and Comparative Examples were equal.)

### <Example 4>

A test cell was produced in the same manner as in Example 2 except that, in the production of the positive electrode, mannitol was used instead of xylitol.

### <Example 5>

A test cell was produced in the same manner as in Example 1 except that, in the production of the positive electrode, threitol having an average particle diameter of 1.5 µm was used instead of xylitol. (Average particle diameters of threitol used in other Examples and Comparative Examples were equal.)

### <Example 6>

A test cell was produced in the same manner as in Example 2 except that, in the production of the positive electrode, threitol was used instead of xylitol.

### <Comparative Example 1>

A test cell was produced in the same manner as in Example 1 except that, in the production of the positive electrode, the sugar alcohol (xylitol) was not added.

### <Comparative Example 2>

A test cell was produced in the same manner as in Example 1 except that, in the production of the positive electrode, magnesium hydroxide having an average particle diameter of 2.9 µm was used instead of xylitol. (An average particle diameter of magnesium hydroxide in Comparative Example 3 was equal.)

### <Comparative Example 3>

A test cell was produced in the same manner as in Example 2 except that, in the production of the positive electrode, magnesium hydroxide was used instead of xylitol.

### <Comparative Example 4>

A test cell was produced in the same manner as in Example 1 except that, in the production of the positive electrode, the amount of xylitol added was changed to 5 mass% based on the mass of the positive electrode active material.

### <Comparative Example 5>

A test cell was produced in the same manner as in Example 3 except that, in the production of the positive electrode, the amount of mannitol added was changed to 5 mass% based on the mass of the positive electrode active material.

### <Comparative Example 6>

A test cell was produced in the same manner as in Example 5 except that, in the production of the positive electrode, the amount of threitol added was changed to 5 mass% based on the mass of the positive electrode active material.

Each of the test cells in Examples and Comparative Examples was subjected to performance evaluation by the following methods. Table 1 shows the evaluation results.

### [Measurement of Cell Capacity]

Under a temperature environment of 25°C, the evaluation target test cell was charged at a constant current of 0.2 C until a cell voltage reached 4.2 V, and then discharged at a constant current of 0.5 C until the cell voltage reached 2.5 V. A discharge capacity in this charge and discharge was determined as a cell capacity.

### [Measurement of Quantity of Heat Generated]

A positive electrode plate was cut to 2×2 cm, a negative electrode plate was cut to 2.1×2.1 cm, and disposed opposite to each other to produce a cell for evaluation. A nail penetration test was performed in the following procedure.

Under an environment of 25°C, the cell for evaluation was charged at a 0.2 C until a cell voltage reached 4.2 V, and continuously charged at the constant voltage until a current value reached a value corresponding 0.05 C. Thereafter, under an environment at 25°C, a tip of a round nail (diameter: 2.7 mm) was contacted with a central part of the charged cell. The round nail were allowed to penetrate at a rate of 1 mm/sec. The penetrated round nail was stopped immediately after drop of the cell voltage due to an internal short circuit was detected. For a given time from the short circuit of the cell with the round nail, a current value I of the short circuit current and the cell voltage V were continuously measured. Then, a product of the current value I and the voltage V (electric power) was integrated with time to calculate quantity of heat generated in the given time.

**[Table 1]**

| | Additive | | Capacity /mAh | Quantity of heat generated /J | |
|---|---|---|---|---|---|
| | Type | Content rate | | 0-0.1 sec | 0-2.0 sec |
| Example 1 | Xylitol | 1wt% | 42.1 | 3.01 | 26.6 |
| Example 2 | Xylitol | 3wt% | 39.8 | 2.93 | 25.1 |
| Example 3 | Mannitol | 1wt% | 43.5 | 2.87 | 24.8 |
| Example 4 | Mannitol | 3wt% | 42.6 | 2.48 | 22.7 |
| Example 5 | Threitol | 1wt% | 43.5 | 2.88 | 24.6 |
| Example 6 | Threitol | 3wt% | 42.2 | 2.55 | 22.9 |
| Comparative Example 1 | - | - | 44.1 | 3.34 | 29.1 |
| Comparative Example 2 | Magnesium hydroxide | 1wt% | 43.5 | 3.24 | 28.3 |
| Comparative Example 3 | Magnesium hydroxide | 3wt% | 42.7 | 3.30 | 28.1 |
| Comparative Example 4 | Xylitol | 5wt% | 19.1 | 1.91 | 14.4 |
| Comparative Example 5 | Mannitol | 5wt% | 24.3 | 2.22 | 18.1 |
| Comparative Example 6 | Threitol | 5wt% | 24.6 | 2.37 | 19.6 |

As shown in Table 1, all the test cells of Examples cause small quantity of heat generated in case of abnormality compared with the test cells of Comparative Examples 1 to 3 in which the sugar alcohol is not added to the positive electrode, and have excellent heat-generation inhibiting function. In addition, the test cells of Examples have a high capacity compared with the test cells of Comparative Examples 4 to 6 in which the addition rate of the sugar alcohol relative to the positive electrode active material was greater than or equal to 5 mass%. The test cells of Comparative Examples 4 to 6 exhibit a considerably decreased capacity.

As obvious from this result, the non-aqueous electrolyte secondary battery having the high capacity and excellent heat-generation inhibiting function may be achieved only when the positive electrode in which the sugar alcohol having less than or equal to 10 carbon atoms is added at an amount of less than 5 mass% relative to the positive electrode active material is used.

### REFERENCE SIGNS LIST

10 Non-aqueous electrolyte secondary battery, 11 Positive electrode, 12 Negative electrode, 13 Separator, 14 Electrode assembly, 16 Outer can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 31a First layer, 31b Second layer, 32 Surface layer, 40 Negative electrode core, 41 Negative electrode mixture layer

## Claims

1. A positive electrode for a non-aqueous electrolyte secondary battery, including:
a positive electrode core; and
a positive electrode mixture layer formed on a surface of the positive electrode core, wherein
the positive electrode includes a sugar alcohol having less than or equal to 10 carbon atoms, and
a content rate of the sugar alcohol is less than 5 mass% based on a mass of a positive electrode active material contained in the positive electrode mixture layer.

2. The positive electrode for a non-aqueous electrolyte secondary battery according to claim 1, wherein the sugar alcohol is at least one selected from the group consisting of erythritol, threitol, pentaerythritol, xylitol, mannitol, and sorbitol.

3. The positive electrode for a non-aqueous electrolyte secondary battery according to claim 1 or 2, wherein
the positive electrode mixture layer includes: a first layer formed on a side of the positive electrode core; and a second layer formed above the positive electrode core via the first layer, and
the content rate of the sugar alcohol is higher in the second layer than in the first layer.

4. The positive electrode for a non-aqueous electrolyte secondary battery according to claim 1 or 2, wherein
the positive electrode includes a surface layer formed on the positive electrode mixture layer, and
the content rate of the sugar alcohol is higher in the surface layer than in the positive electrode mixture layer.

5. The positive electrode for a non-aqueous electrolyte secondary battery according to any one of claims 1 to 4, wherein an average particle diameter of the sugar alcohol is smaller than an average particle diameter of the positive electrode active material, and is greater than or equal to 0.1 µm and less than or equal to 2 µm.

6. A secondary battery, comprising:
the positive electrode according to any one of claims 1 to 5;
a negative electrode; and
a non-aqueous electrolyte.
